# EUROPEAN PATENT APPLICATION

(11) **EP 4 459 254 A1**
(43) Date of publication of application: **06.11.2024**
(21) Application number: 23187665.7
(22) Date of filing: 25.07.2023
(51) Int. Cl.: G01L 3/10, G01D 5/244

(54) **TORQUE SENSOR DEVICE, SYSTEM AND METHOD**

(30) Priority: 05.05.2023 US 202363500456 P
(71) Applicant: Melexis Technologies SA, 2022 Bevaix (CH)
(72) Inventor: Schott, Christian, 2022 Bevaix (CH)
(74) Representative: Jacobs, Lambert

(57) **Abstract**

A torque sensor device for measuring a torque acting on a rotatable shaft assembly comprising a first multipole magnet (M1) and a second multipole magnet (M2); the rotatable shaft having an inner shaft portion and an outer shaft portion, at least one of which is elastically deformable; and a first and a second multipole magnet (M1, M2); the sensor device comprising a plurality of magnetic sensors for measuring one or more magnetic field components; and a processing circuit for determining a first and a second angle (θ1, θ2), and for determining an angular difference, and for providing a signal indicative of a torque. A torque sensor system. A method of determining a torque.

## Description

### Field of the invention

The present invention relates in general to the field of magnetic sensor devices, systems and methods, and in particular to the field of magnetic torque sensors, and methods of determining a torque exerted upon a rotatable shaft assembly.

### Background of the invention

Torque sensors for e-bikes are known, for example from EP3112833(B1) and US2017003182(A1), both of which are incorporated herein by reference in its entirety.

There is always room for improvements or alternatives.

### Summary of the invention

It is an object of embodiments of the present invention to provide a torque sensor device, and a torque sensor system, and a method of measuring the torque exerted upon a rotatable shaft, e.g. a shaft of an e-bike.

It is an object of embodiments of the present invention to provide a torque sensor system with an improved accuracy, and/or which is less sensitive to external influences (such as e.g. varying ambient temperature, external disturbance field, etc.), and/or which is less sensitive to ageing effects (such as e.g. demagnetization), and/or which is less sensitive to mounting tolerances, and preferably two or more of these.

It is an object of embodiments of the present invention to provide a torque sensor system furthermore capable of providing an absolute position of the rotatable shaft.

It is an object of embodiments of the present invention to provide a torque sensor system capable of measuring a torque exerted upon the shaft, even when the shaft is not rotating.

It is an object of embodiments of the present invention to provide a torque sensor system that is easier to produce, and/or that is cheaper to produce and/or has a cheaper component cost.

According to a first aspect, the present invention provides a torque sensor system for determining a torque exerted upon an elastically deformable coupling having a first end (e.g. EC1) and a second end (e.g. EC2), the torque sensor system comprising: a first angular position sensor subsystem having a first stationary part mountable to a frame or a housing, and having a first rotatable part (e.g. M1) connected or connectable to said first end (e.g. EC1) of the elastically deformable coupling, the first angular position sensor subsystem being configured for providing at least one first electrical signal related to a first angular position (e.g. θ1) of the first rotatable part relative to the first stationary part; a second angular position sensor subsystem having a second stationary part mountable to said frame or housing, and having a second rotatable part (e.g. M2) connected or connectable to the second end (e.g. E4) of the elastically deformable coupling, the second angular position sensor subsystem being configured for providing at least one second electrical signal related to a second angular position (e.g. θ2) of the second rotatable part relative to the second stationary part; a processing circuit communicatively connected or connectable to said first and said second stationary part for receiving said at least one first and second electrical signal, and configured for determining said first angle (e.g. θ1) based on said at least one first signal, and for determining said second angle (e.g. θ2) based on said at least one second signal, and for determining an angular difference between the first angle (e.g. θ1) and the second angle (e.g. θ2), and for providing a signal indicative of the torque as a function of the angular difference, for example proportional to the angular difference, e.g. taking into account a factor related to a stiffness of the elastically deformable coupling.

The first stationary part and the second stationary part may be mounted to a housing, or to a frame. The shaft is rotatable relative to said housing or frame.

In an embodiment, the processing circuit may be further configured for determining an angular speed, e.g. by determining a time derivative of the first angle or the second angle.

The at least one first signal and the at least one second signal may be a single first signal and a single second signal. This first signal and this second signal may be quadrature signals (i.e. having substantially the same amplitude but 90° phase shifted).

In an embodiment, the first end (e.g. EC1) of the elastically deformable coupling is located in the vicinity of the second end (e.g. EC2) of the elastically deformable coupling; and the elastically deformable coupling is located mainly in a space outside of the first and second end. Or stated in other words: a major portion of the elastically deformable coupling is located in a space outside of the first and second end.

In an embodiment, the first stationary part has first sensing means (e.g. one or more first sensors or coils), and the second stationary part has second sensing means (e.g. one or more second sensors or coils), and the first sensing means and the second sensing means are both located in the vicinity of the first end of the elastically deformable coupling. In other words, only a very small portion of the elastically deformable coupling is located between the first and second sensing means, e.g. a portion extending over less than 30% of the axial length of the elastically deformable coupling, or less than 25% or less than 20%.

This offers the advantage that the sensing means can be combined in a more compact manner, e.g. on a single PCB, or integrated in a single packaged device on multiple dies, or even integrated in a single semiconductor die.

In an embodiment, the first rotatable part (e.g. M1) comprises a first multipole ring magnet (e.g. M1) having a first periodicity (or a first number of magnetic pole pairs); and the second rotatable part (e.g. M2) comprises a second multipole ring magnet (e.g. M2) having a second periodicity; and wherein the first stationary part comprises one or more magnetic sensors configured for measuring characteristics of the magnetic field generated by the first multipole magnet (e.g. M1), and configured for providing a first signal or a first set of electrical signals related to an angular position of the first multipole magnet (e.g. M1) relative to the first stationary part; and wherein the second stationary part comprises one or more magnetic sensors configured for measuring characteristics of the magnetic field generated by the second multipole magnet (e.g. M2), and configured for providing a second signal or a second set of electrical signals related to (e.g. indicative of) an angular position of the second multipole magnet (e.g. M2) relative to the second stationary part; and wherein the processing circuit is further configured for determining the first angle (e.g. θ1) based on the first signal or the first set of electrical signals, and is further configured for determining the second angle (e.g. θ2) based on the second signal or the second set of electrical signals.

The first signal and the second signal may be quadrature signals (i.e. having substantially the same amplitude but 90° phase shifted), e.g. because the first and the second signal are magnetic field components measured at a same location but oriented in orthogonal directions, or because the first and the second signal are magnetic field components oriented in a same direction, but at two locations spaced apart by substantially by half a pole pitch.

In an embodiment, the second periodicity is equal to the first periodicity.

In an embodiment, the second periodicity is different from the first periodicity.

The first stationary part and the second stationary part may be integrally formed, e.g. on a single semiconductor substrate, or as a single packaged device (or chip) comprising multiple dies, or on a single printed circuit board comprising multiple packaged devices (or chips).

The inner shaft can also be referred to as the central shaft. The outer shaft can also be referred to as the hollow shaft. The inner shaft and the outer shaft are preferably coaxially mounted.

The first magnet and the second magnet may each have e.g. at least 7 poles, or at least 12 poles, or at least 19 poles, or at least 32 poles.

Preferably the first magnet and the second magnet have an equal number of magnetic poles or pole pairs, e.g. at least four, or at least six, or at least seven, or at least eight, or at least ten, or at least twelve, or at least fourteen, or at least sixteen, or at least nineteen (19), or at least thirty-two (32).

In an embodiment, the ring magnets have a predefined outer radius, and the sensors are located at a second radius larger than the outer radius of the ring magnets.

In an embodiment, the ring magnets are radially magnetized, and the sensors are configured for measuring a component in the circumferential direction and/or a component in the radial direction, e.g. one or two components in the circumferential direction at one or two different locations, e.g. one or two components in the radial direction at one or two different locations, e.g. one component in the circumferential direction and one component in the radial direction in one or two locations.

In an embodiment, the ring magnets are axially magnetized, and the sensors are configured for measuring a component in the circumferential direction and/or a component in the axial direction, e.g. one or two components in the circumferential direction at one or two different locations, e.g. one or two components in the axial direction at one or two different locations, e.g. one component in the circumferential direction and one component in the axial direction in one or two locations.

In an embodiment, the first stationary part is configured for measuring a magnetic field component (e.g. Bx1) in a direction parallel to an imaginary plane tangential to a surface of the first magnet (e.g. M1) at a first sensor location (e.g. P1), and is configured for measuring a magnetic field component (e.g. Bz1) in a radial direction of the first magnet (e.g. M1) at the first sensor location (e.g. P1); and wherein the second stationary part is configured for measuring a magnetic field component (e.g. Bx2) in a direction parallel to an imaginary plane tangential to a surface of the second magnet (e.g. M2) at a second sensor location (e.g. P2) spaced from the first sensor location (e.g. P1), and is configured for measuring a magnetic field component (e.g. Bz2) in a radial direction of the second magnet (e.g. M2) at the second sensor location (e.g. P2).

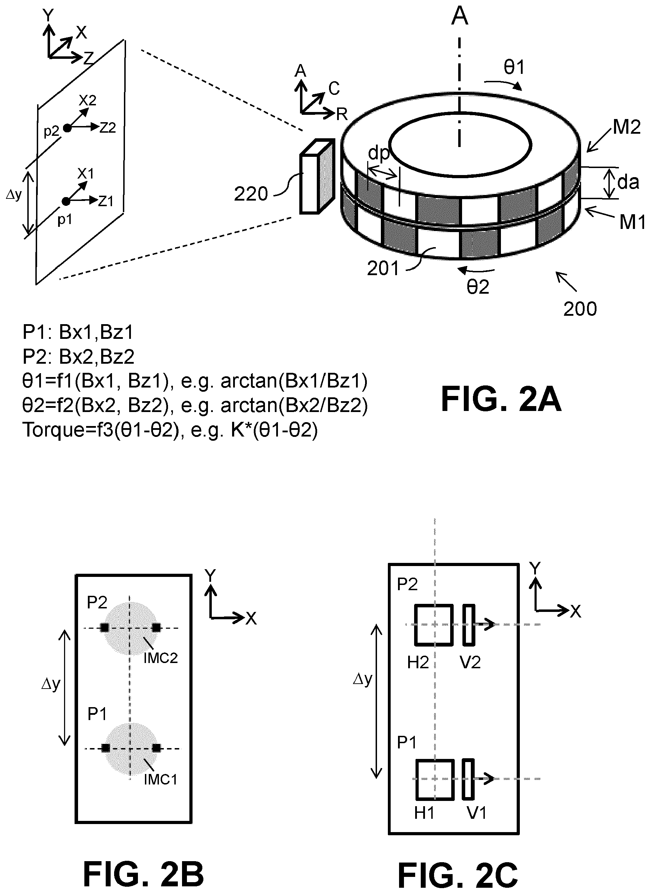

An example of this embodiment is illustrated in FIG. 2A. The angles, and the torque derived therefrom, is robust against temperature changes, distance between the sensor device and the magnets, against demagnetisation, but not against an external disturbance field.

In an embodiment, the first stationary part is configured for measuring a magnetic field component (e.g. Bx1) in a circumferential direction of the first magnet (e.g. M1) at a first sensor location (e.g. P1), and is configured for measuring also a magnetic field component (e.g. Bz1 or By1) oriented in a direction perpendicular to the circumferential direction (e.g. radial direction of axial direction) at the first sensor location; and wherein the second stationary part is configured for measuring a magnetic field component (e.g. Bx2) in a circumferential direction of the second magnet (e.g. M2) at a second sensor location (e.g. P2) spaced from the first sensor location (e.g. P1), and is configured for measuring also a magnetic field component (e.g. Bz2 or By2) oriented in a direction perpendicular to the circumferential direction (e.g. in a radial direction or axial direction) at the second sensor location (e.g. P2).

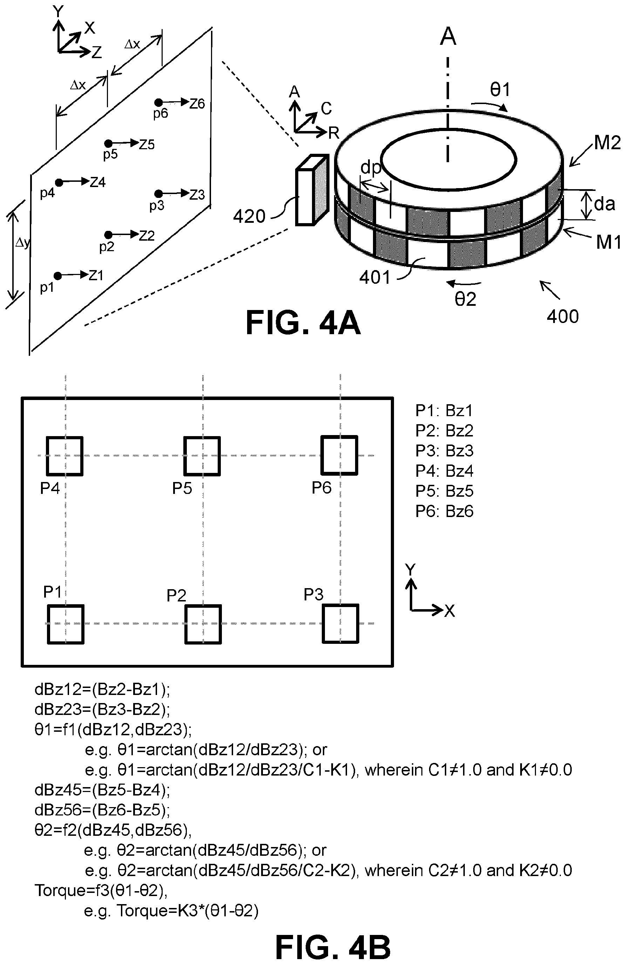

In an embodiment, the first stationary part is configured for measuring two parallel magnetic field components (e.g. Bz1, Bz2) at a first and a second sensor location (e.g. P1, P2) facing the first magnet (e.g. M1), and wherein the second stationary part is configured for measuring two parallel magnetic field components (e.g. Bz4, Bz5) at a third and a fourth sensor location (e.g. P4, P5) facing the second magnet (M2), e.g. as illustrated in FIG. 4B without the sensor locations P3 and P6.

In an embodiment, the first stationary part is configured for measuring three parallel magnetic field components (e.g. Bz1, Bz2, Bz3) at a first, second and third sensor location (e.g. P1, P2, P3) facing the first magnet (e.g. M1); and the second stationary part is configured for measuring three parallel magnetic field component (e.g. Bz4, Bz5, Bz6) at a fourth, fifth and sixth sensor location (e.g. P4, P5, P6), facing the second magnet (e.g. M2).

An example of such as system is illustrated in FIG. 4A.

The three parallel magnetic field components may be oriented in the X-direction (e.g. circumferential direction), or in the Y-direction (e.g. axial direction), or in the Z-direction (e.g. radial direction).

The angles, and the torque derived therefrom, is robust against temperature changes, distance between the sensor device and the magnets, against demagnetisation, and against an external disturbance field.

In an embodiment, the first stationary part is configured for measuring two orthogonal magnetic field components (e.g. Bx1, Bz1) at a first sensor location (e.g. P1) and two orthogonal magnetic field components (e.g. Bx2, Bz2) at a second sensor location (e.g. P2) spaced from the first sensor location, both the first and second sensor location (e.g. P1, P2) facing the first magnet (e.g. M1); and wherein the second stationary part is configured for measuring two orthogonal magnetic field components (e.g. Bx3, Bz3) at a third sensor location (P e.g. 3) and two orthogonal magnetic field components (e.g. Bx4, Bz4) at a fourth sensor location (e.g. P4) spaced from the third sensor location, both the third and fourth sensor location (e.g. P3, P4) facing the second magnet (e.g. M2); and wherein the processing circuit is configured for determining a first pairwise difference (e.g. dBx12) and a second pairwise difference (e.g. dBz12) between a signal measured at the first sensor location and a signal measured at the second sensor location, and for providing the first angle (e.g. θ1) as a function of a ratio of the first and the second pairwise difference (e.g. dBx12, dBz12); and wherein the processing circuit is configured for determining a third pairwise difference (e.g. dBx34) and a fourth pairwise difference (e.g. dBz34) between a signal measured at the third sensor location and a signal measured at the fourth sensor location, and for providing the second angle (e.g. θ2) as a function of a ratio of the third and the fourth pairwise difference (e.g. dBx34, dBz34).

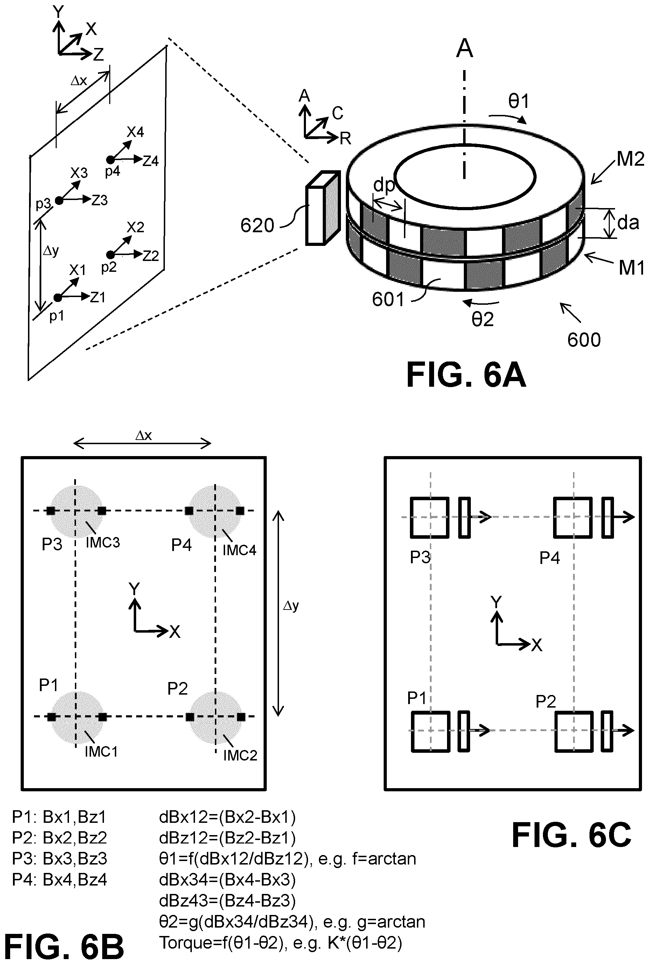

An example of this embodiment is illustrated in FIG. 6A. The angles, and the torque derived therefrom, is robust against temperature changes, distance between the sensor device and the magnets, against demagnetisation, and against an external disturbance field.

In an embodiment, the first and the second stationary part each comprise at least one magnetic sensor or sensor structure (e.g. a 1D magnetic pixel or a 2D magnetic pixel or a 3D magnetic pixel) situated in one (e.g. P1) or two (e.g. P1, P2) or three (e.g. P1, P2, P3) sensor locations, each magnetic sensor configured for measuring one or more magnetic field components (e.g. Bx, By, Bz) at each sensor location.

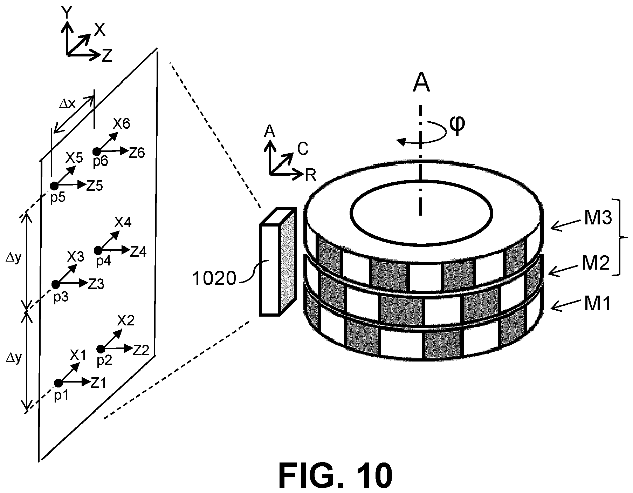

In an embodiment, each magnetic sensor comprises a horizontal Hall element, or comprises an IMC and two horizontal Hall elements (see e.g. FIG. 2B or FIG. 6B or FIG. 10); or comprises a horizontal Hall element and a vertical Hall element (see e.g. FIG. 2C or FIG. 6C or FIG. 10); or comprises a horizontal Hall element and an MR element (see e.g. FIG. 2C or FIG. 6C or FIG. 10); or comprises a horizontal Hall element and two vertical Hall elements (variant of FIG. 2C), or comprises a horizontal Hall element and two MR elements (variant of FIG. 2C); or comprises a vertical Hall element (variant of FIG. 4B), or comprises an MR element (variant of FIG. 4B); or comprises an IMC and four horizontal Hall elements (variant of FIG. 2B or variant of FIG. 6B); or comprises two vertical Hall elements oriented in perpendicular directions (e.g. variant of FIG. 2C, variant of 6C, FIG. 10); or comprises two MR elements oriented in perpendicular directions (e.g. variant of FIG. 2C, variant of 6C, FIG. 10).

In an embodiment, the first stationary part and the second stationary part are implemented on a single semiconductor substrate. The processing circuit may also be implemented on this semiconductor substrate, or may be implemented on another semiconductor substrate (e.g. in an external processor communicatively connected to the sensor device that comprises said semiconductor substrate having the magnetic sensors).

In an embodiment, the torque sensor system further comprising a third angular position sensor subsystem having a third stationary part mountable to the frame or housing, and having a third rotatable part (e.g. M3), wherein the third rotatable part has a third periodicity; wherein the third rotatable part (e.g. M3) is either fixedly connected to the first rotatable part (e.g. M1) and thus rotatable relative to the second rotatable part (e.g. M2), or is fixedly connected to the second rotatable part (e.g. M2) and thus rotatable relative to the first rotatable part (e.g. M1); and wherein the third angular position sensor subsystem is configured for providing at least one third electrical signal related to a third angular position (e.g. θ3) of the third rotatable part (e.g. M3) relative to the third stationary part; and wherein the processing circuit is further configured for determining said third angle (e.g. θ3) based on said at least one third signal, and for determining an absolute position of the third rotatable part (e.g. M3) based on the third angle (e.g. θ3) and on one or both of the first angle (e.g. θ1) and the second angle (e.g. θ2), e.g. based on θ1 and θ3, or based on θ1 and θ2, e.g. using the nonius principle.

Preferably the third periodicity is different from the first and the second periodicity.

In an example, the third rotatable part is a third multipole magnet (M3) having a number of pole pairs different from the number of pole pairs of the first and the second multipole magnet, e.g. one pair more or one pair less.

In an example, the third rotatable part is a third electrically conductive target (e.g. metal target) having a number of lobes different from the number of lobes of the first and the second target, e.g. one more or one less.

In an example, the third rotatable part is a third ferromagnetic shape having a third geometric profile having a number of protrusions or teeth, different from the number of protrusions or teeth of the first or second ferromagnetic shape.

In an embodiment, the first stationary part and the second stationary part and the third stationary part are implemented on a single semiconductor substrate.

In an embodiment, the third rotatable part comprises a third magnet (M3), which is a circular magnet having an outer diameter equal to the outer diameter of the first magnet and the second magnet, but having a different number of pole pairs, for example one pole pair less, or one more pole pair.

This allows the torque sensor devise to determine an absolute position using the nonius principle, e.g. in a same or a similar manner as described in US2022196435(A1), incorporated herein by reference in its entirety.

In an embodiment, the first angular position sensor subsystem comprises a first permanent magnet, and wherein the first rotatable part comprises a first ferromagnetic shape having a first geometric profile with a first periodicity; wherein the second angular position sensor subsystem comprises a second permanent magnet, and wherein the second rotatable part comprises a second ferromagnetic shape having a second geometric profile with a second periodicity; and wherein the first stationary part comprises a first set of magnetic probes for sensing signals provided by the first ferromagnetic shape, and configured for providing a first set of electrical signals related to (e.g. indicative of) an angular position of the first ferromagnetic shape relative to the first stationary part; and wherein the second stationary part comprises a second set of magnetic probes for sensing signals provided by the second ferromagnetic shape, and configured for providing a second set of electrical signals related to (e.g. indicative of) an angular position of the second ferromagnetic shape relative to the second stationary part; and wherein the processing circuit is further configured for determining the first angle (e.g. θ1) based on the first set of electrical signals, and is further configured for determining the second angle (e.g. θ2) based on the second set of electrical signals.

In an embodiment, the first and second ferromagnetic shape have a predefined outer radius, and the sensors are located at a second radius larger than the outer radius of the ferromagnetic shapes.

In an embodiment, the second periodicity is equal to the first periodicity.

In an embodiment, the second periodicity is different from the first periodicity.

In an embodiment, the first rotatable part comprises a first electrically conductive target having a first geometric profile with a first periodicity; wherein the second rotatable part comprises a second electrically conductive target having a second geometric profile with a second periodicity; and wherein the first stationary part comprises a first set of coils comprising: at least one transmitter coil for generating a first alternating magnetic field, and at least two or at least three receiver coils configured for receiving the first alternating magnetic field modulated by the first target, and configured for providing a first set of electrical signals related to (e.g. indicative of) an angular position of the first target relative to the first set of coils; and wherein the second stationary part comprises a second set of coils comprising: at least one transmitter coil for generating a second alternating magnetic field, and at least two or at least three receiver coils configured for receiving the second alternating magnetic field modulated by the second target, and configured for providing a second set of electrical signals related to (e.g. indicative of) an angular position of the second target relative to the second set of coils; and wherein the processing circuit is further configured for determining the first angle (e.g. θ1) based on the first set of electrical signals, and is further configured for determining the second angle (e.g. θ2) based on the second set of electrical signals.

In an embodiment, the second periodicity is equal to the first periodicity.

In an embodiment, the second periodicity is different from the first periodicity.

In an embodiment, the elastically deformable coupling comprises an inner shaft portion mechanically connected to a concentric outer shaft portion, the inner shaft portion having a first end (e.g. E1) and a second end (e.g. E2), the outer shaft portion also having a first end (e.g. E3) and a second end (e.g. E4), wherein the first end (e.g. E1) of the inner shaft portion corresponds to the first end (e.g. EC1) of the elastically deformable coupling, and wherein the second end (e.g. E4) of the outer shaft portion corresponds to the second end (e.g. EC2) of the elastically deformable coupling, and wherein the second end (e.g. E2) of the inner shaft portion is fixedly connected to the first end (e.g. E3) of the outer shaft portion.

The inner shaft can also be referred to as the central shaft. The outer shaft can also be referred to as the hollow shaft. The inner shaft and the outer shaft are preferably coaxially mounted.

Preferably the first magnet and the second magnet have an equal number of magnetic pole pairs, e.g. at least four, or at least six, or at least eight, or at least ten, or at least twelve, , or at least fourteen, or at least sixteen.

The inner shaft portion may be a hollow shaft or a solid shaft.

The outer shaft portion is a hollow shaft portion.

The second end may be fixedly connected to the third end using a "shaft joint", or in any other suitable manner.

In an embodiment, the two or three magnets are located adjacent each other, near one end of the shaft.

In an embodiment, the torque sensor system further comprises one or more of the following: a first pedal connected to the second end (e.g. E2) of the inner shaft portion or to the third end (e.g. E3) of the outer shaft portion; a second pedal connected to the first end (e.g. E1) of the inner shaft portion; a sprocket or blade connected to the fourth end (e.g. E4) of the outer shaft portion.

According to a second aspect, the present invention also provides a method of determining a torque exerted upon an elastically deformable coupling having a first end (e.g. EC1) and a second end (EC2), the method comprising the steps of: i) providing a first angular position sensor subsystem having a first stationary part mountable to a frame or a housing, and having a first rotatable part (e.g. M1) connected or connectable to said first end (e.g. EC1) of the elastically deformable coupling; ii) providing a second angular position sensor subsystem having a second stationary part mountable to said frame or housing, and having a second rotatable part (e.g. M2) connected or connectable to the second end (e.g. EC2) of the elastically deformable coupling; iii) providing a processing circuit communicatively connected or connectable to said first and said second stationary part for receiving said at least one first and second electrical signal; iv) providing, by the first angular position sensor subsystem, at least one first electrical signal related to a first angular position (e.g. θ1) of the first rotatable part relative to the first stationary part; v) providing, by the second angular position sensor subsystem, at least one second electrical signal related to a second angular position (e.g. θ2) of the second rotatable part relative to the second stationary part; vi) determining, by the processing circuit, said first angle (e.g. θ1) based on said at least one first signal, and determining said second angle (e.g. θ2) based on said at least one second signal, and determining an angular difference between the first angle (e.g. θ1) and the second angle (e.g. θ2), and providing a signal indicative of the torque as a function of the angular difference, for example proportional to the angular difference, e.g. taking into account a factor related to a stiffness of the elastically deformable coupling.

In an embodiment, the method further comprises the steps of: vii) providing a third angular position sensor subsystem having a third stationary part mountable to the frame or housing, and having a third rotatable part (e.g. M3) connected or connectable to the first or to the second rotatable part (e.g. M1, M2); viii) providing, by the third angular position sensor subsystem, at least one third electrical signal related to a third angular position (e.g. θ3) of the third rotatable part (e.g. M3) relative to the third stationary part; ix) determining, by the processing circuit, said third angle (e.g. θ3) based on said at least one third signal, and determining an absolute position of the third rotatable part (e.g. M3) based on the third angle (e.g. θ3) and on one or both of the first angle (e.g. θ1) and the second angle (e.g. θ2), e.g. based on θ1 and θ3, or based on θ1 and θ2, e.g. using the nonius principle.

The third rotatable part preferably has a third periodicity different from the first periodicity and different from the second periodicity.

According to a third aspect, the present invention also provides a torque sensor device (e.g. in the form of an integrated semiconductor device) for use in a torque sensor system according to the first aspect, wherein the torque sensor device comprises said first and said second stationary part; and comprises said processing circuit being configured for performing at least the steps iv) to iv) of a method according to the second aspect when used in combination with said first and second rotatable part (e.g. multipole magnets or electrically conductive targets).

In an embodiment, the processing circuit is further configured for performing also the steps viii) and ix) for determining an absolute position, when used in a torque sensor system that furthermore comprises said third rotatable part.

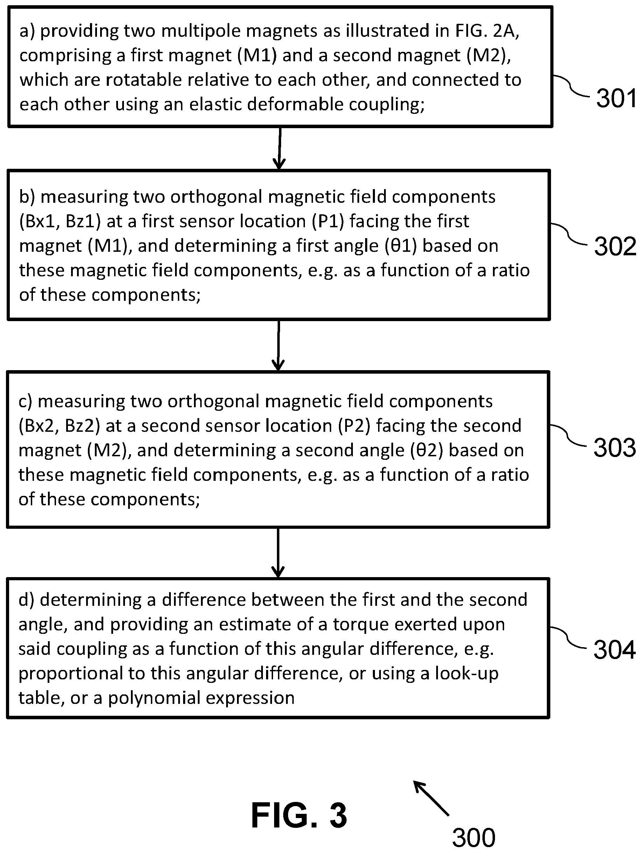

In an embodiment, the elastically deformable coupling comprises a first and a second multipole magnet, and the method comprising the steps of (e.g. as illustrated in FIG. 3): a) providing two multipole magnets, e.g. as illustrated in FIG. 2A, comprising a first magnet (e.g. M1) and a second magnet (e.g. M2), which are rotatable relative to each other, and connected to each other using an elastic deformable coupling; b) measuring two orthogonal magnetic field components (e.g. Bx1, Bz1) at a first sensor location (e.g. P1) facing the first magnet (e.g. M1), and determining a first angle (e.g. θ1) based on these magnetic field components, e.g. as a function of a ratio of these components; c) measuring two orthogonal magnetic field components (e.g. Bx2, Bz2) at a second sensor location (e.g. P2) facing the second magnet (e.g. M2), and determining a second angle (e.g. θ2) based on these magnetic field components, e.g. as a function of a ratio of these components; d) determining a difference between the first and the second angle, and providing an estimate of a torque exerted upon said coupling as a function of this angular difference, e.g. proportional to this angular difference.

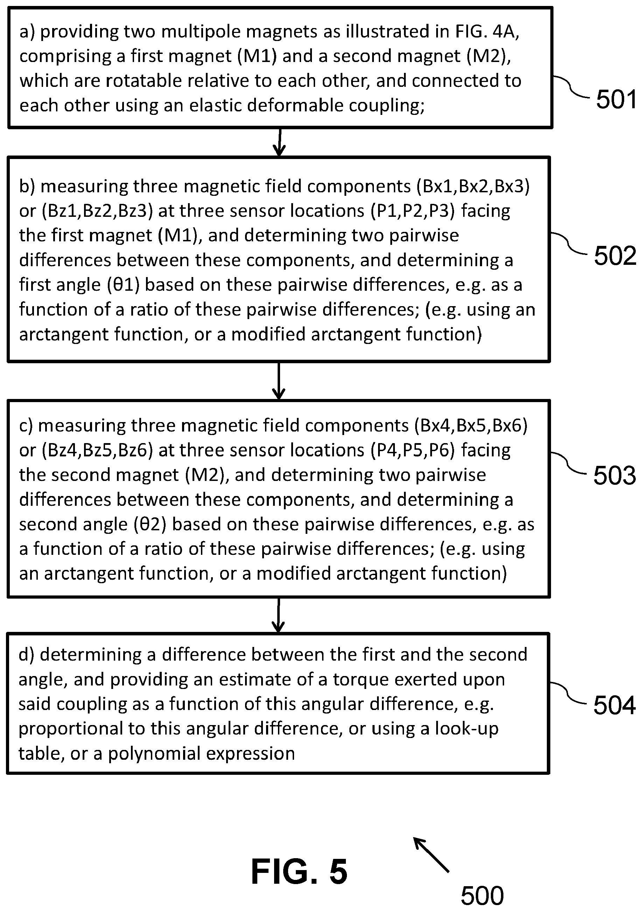

In an embodiment, the elastically deformable coupling comprises a first and a second multipole magnet, and the method comprising the steps of (e.g. as illustrated in FIG. 5): a) providing two multipole magnets, e.g. as illustrated in FIG. 4A, comprising a first magnet (e.g. M1) and a second magnet (e.g. M2), which are rotatable relative to each other, and connected to each other using an elastic deformable coupling; b) measuring three magnetic field components (e.g. Bx1,Bx2,Bx3) or (e.g. Bz1,Bz2,Bz3) at three sensor locations (e.g. P1,P2,P3) facing the first magnet (e.g. M1), and determining two pairwise differences between these components, and determining a first angle (e.g. θ1) based on these pairwise differences, e.g. as a function of a ratio of these pairwise differences; c) measuring three magnetic field components (e.g. Bx4,Bx5,Bx6) or (e.g. Bz4,Bz5,Bz6) at three sensor locations (e.g. P4,P5,P6) facing the second magnet (e.g. M2), and determining two pairwise differences between these components, and determining a second angle (e.g. θ2) based on these pairwise differences, e.g. as a function of a ratio of these pairwise differences; d) determining a difference between the first and the second angle, and providing an estimate of a torque exerted upon said coupling as a function of this angular difference, e.g. proportional to this angular difference.

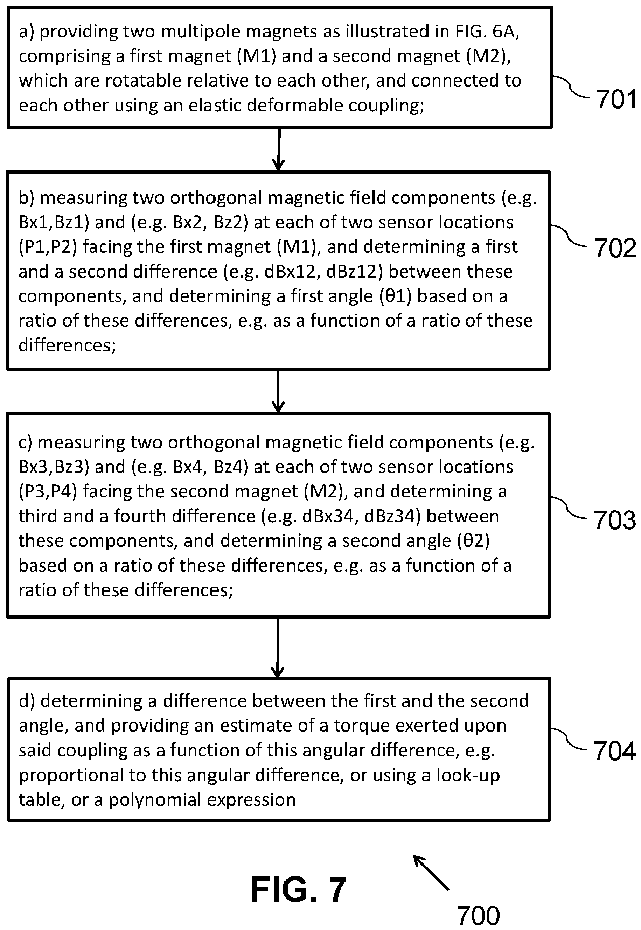

In an embodiment, the elastically deformable coupling comprises a first and a second multipole magnet, and the method comprising the steps of (e.g. as illustrated in FIG. 7): a) providing two multipole magnets as illustrated in FIG. 6A, comprising a first magnet (e.g. M1) and a second magnet (e.g. M2), which are rotatable relative to each other, and connected to each other using an elastic deformable coupling; b) measuring two orthogonal magnetic field components (e.g. Bx1,Bz1) and (e.g. Bx2, Bz2) at each of two sensor locations (e.g. P1,P2) facing the first magnet (e.g. M1), and determining a first and a second difference (e.g. dBx12, dBz12) between these components, and determining a first angle (e.g. θ1) based on a ratio of these differences, e.g. as a function of a ratio of these differences; c) measuring two orthogonal magnetic field components (e.g. Bx3,Bz3) and (e.g. Bx4, Bz4) at each of two sensor locations (e.g. P3,P4) facing the second magnet (e.g. M2), and determining a third and a fourth difference (e.g. dBx34, dBz34) between these components, and determining a second angle (e.g. θ2) based on a ratio of these differences, e.g. as a function of a ratio of these differences; d) determining a difference between the first and the second angle, and providing an estimate of a torque exerted upon said coupling as a function of this angular difference, e.g. proportional to this angular difference.

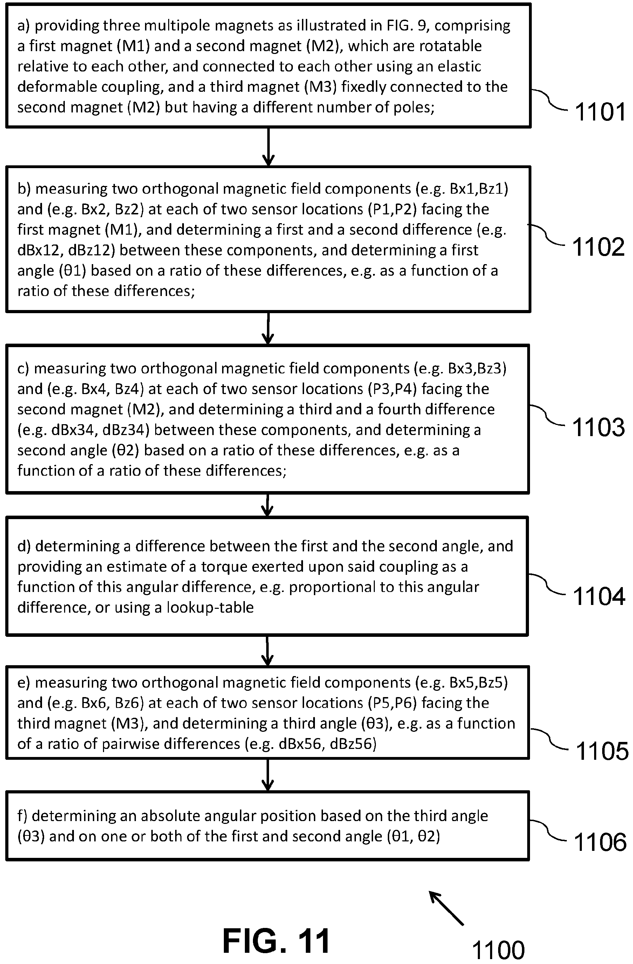

In an embodiment, the elastically deformable coupling comprises a first and a second multipole magnet, and the method comprising the steps of (e.g. as illustrated in FIG. 11): a) providing three multipole magnets as illustrated in FIG. 10, comprising a first magnet (e.g. M1) and a second magnet (e.g. M2), which are rotatable relative to each other, and connected to each other using an elastic deformable coupling, and a third magnet (e.g. M3) fixedly connected to the first magnet (M1) or to the second magnet (e.g. M2) but having a different number of poles; b) measuring two orthogonal magnetic field components (e.g. Bx1,Bz1) and (e.g. Bx2, Bz2) at each of two sensor locations (e.g. P1,P2) facing the first magnet (e.g. M1), and determining a first and a second difference (e.g. dBx12, dBz12) between these components, and determining a first angle (e.g. θ1) based on a ratio of these differences, e.g. as a function of a ratio of these differences; c) measuring two orthogonal magnetic field components (e.g. Bx3,Bz3) and (e.g. Bx4, Bz4) at each of two sensor locations (e.g. P3,P4) facing the second magnet (e.g. M2), and determining a third and a fourth difference (e.g. dBx34, dBz34) between these components, and determining a second angle (e.g. θ2) based on a ratio of these differences, e.g. as a function of a ratio of these differences; d) determining a difference between the first and the second angle, and providing an estimate of a torque exerted upon said coupling as a function of this angular difference, e.g. proportional to this angular difference; e) measuring two orthogonal magnetic field components (e.g. Bx5,Bz5) and (e.g. Bx6, Bz6) at each of two sensor locations (e.g. P5,P6) facing the third magnet (e.g. M3); f) determining an absolute angular position based on the third angle, and on at least one of the first and the second angle.

Particular and preferred aspects of the invention are set out in the accompanying independent and dependent claims. Features from the dependent claims may be combined with features of the independent claims and with features of other dependent claims as appropriate and not merely as explicitly set out in the claims. These and other aspects of the invention will be apparent from and elucidated with reference to the embodiment(s) described hereinafter.

### Brief description of the drawings

**FIG. 1** shows an illustrative example of a torque sensor system according to an embodiment of the present invention. The torque sensor system comprises an inner shaft portion and an outer shaft portion, and two multi-pole magnets, and a sensor device for determining a torque.
**FIG. 2A** shows the two magnets of FIG. 1, which are rotatable relative to each another, and shows a schematic representation of a sensor arrangement or a sensor device with two sensor positions.
**FIG. 2B** and **FIG. 2C** are schematic representations of sensor arrangements or sensor devices that can be used in the system of FIG. 2A.
**FIG. 3** shows a flowchart of a method of determining or estimating a torque exerted upon a system as shown in FIG. 2A.
**FIG. 4A** shows the two magnets of FIG. 1, which are rotatable relative to each other, and shows a schematic representation of a sensor arrangement or a sensor device with six sensor positions.
**FIG. 4B** is a schematic representation of a particular sensor arrangement or a particular sensor device that can be used in the system of FIG. 4A.
**FIG. 5** shows a flowchart of a method of determining or estimating a torque exerted upon a system as shown in FIG. 4A.
**FIG. 6A** shows the two magnets of FIG. 1, which are rotatable relative to each another, and shows a schematic representation of a sensor arrangement or a sensor device with four sensor positions.
**FIG. 6B** and **FIG. 6C** are schematic representations of particular sensor arrangements or particular sensor devices that can be used in the system of FIG. 6A.
**FIG. 7** shows a flowchart of a method of determining or estimating a torque exerted upon a system as shown in FIG. 6A.
**FIG. 8** is a high-level block-diagram of a sensor device that can be used in embodiments of the present invention.
**FIG. 9** shows an illustrative example of a torque sensor system according to an embodiment of the present invention. The torque sensor system comprises an inner shaft portion and an outer shaft portion, and three multi-pole magnets, and a sensor device for determining a torque and an absolute position of the inner shaft.
**FIG. 10** shows the three magnets of FIG. 9, where M2 and M3 are fixedly connected to each other, and where M1 is rotatable relative to M2 and M3, and shows a schematic representation of a sensor arrangement or a sensor device with three sensor positions, comparable to FIG. 6A.
**FIG. 11** shows a flowchart of a method of determining or estimating a torque exerted upon a system as shown in FIG. 10, and for determining an absolute angle.
**FIG. 12** shows a flowchart of a method of determining a torque exerted upon an elastically deformable coupling, proposed by the present invention, and for optionally also determining an absolute angle.

The drawings are only schematic and are non-limiting. In the drawings, the size of some of the elements may be exaggerated and not drawn on scale for illustrative purposes. Any reference signs in the claims shall not be construed as limiting the scope. In the different drawings, the same or like reference signs (e.g. same modulo 100) typically refer to the same or analogous elements.

### Detailed description of illustrative embodiments

The present invention will be described with respect to particular embodiments and with reference to certain drawings but the invention is not limited thereto but only by the claims.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

The terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In this document, IMC stands for "integrated magnetic flux concentrator".

In this document, PCB stands for "printed circuit board".

In this document, MR elements stands for "magneto-resistive elements.

In this document, the expression "arctangent function of a value R" means arctan(R).

In this document, the expression "modified arctangent function of a value R" means arctan(R/C-K), where C is different from 1.0 and K is different from 0.0.

In this document, the terms "horizontal Hall element" and "horizontal Hall plate" are used as synonyms.

In this document, the term "magnetic sensor element" may refer to a horizontal Hall element, a vertical Hall element, a magneto resistive element (e.g. GMR, AMR, XMR, TMR), etc.
in this document, the term "magnetic sensor" or "magnetic sensor structure" refers to a structure or arrangement comprising one or more magnetic sensor elements, and optionally an IMC. A magnetic sensor may function as a 1D (one-dimensional) magnetic pixel, or as a 2D (two-dimensional) magnetic pixel, or as a 3D (three-dimensional) magnetic pixel.

In this document, the expression "2D magnetic pixel" means a magnetic sensor that measures two orthogonal magnetic field components in a very small volume, e.g. at a single sensor location, or at two sensor locations that substantially coincide, e.g. located apart by a distance smaller than 100 micron, or smaller than 80 micron, or smaller than 60 micron.

In this document, unless explicitly mentioned otherwise, the term "magnetic sensor device" or "torque sensor device" refers to a semiconductor device, packaged or unpackaged, comprising at least one "magnetic sensor structure". The sensor device may be comprised in a package, also called "chip", although that is not absolutely required. The sensor device preferably contains a semiconductor substrate.

In this document, the expression "in-plane component of a magnetic field vector" and "projection of the magnetic field vector in the sensor plane" mean the same. If the sensor device is or comprises a substrate, this also means "magnetic field component parallel to the substrate".

In this document, the expression "out-of-plane component of a vector" and "Z component of the vector" and "projection of the vector on an axis perpendicular to the sensor plane" mean the same.

Embodiments of the present invention are typically described using an orthogonal coordinate system which is fixed to the sensor device, and having three axes X, Y, Z, where the X and Y axis are parallel to the substrate, and the Z-axis is perpendicular to the substrate.

In this document, the expression "spatial derivative" or "derivative" or "spatial gradient" or "gradient" are used as synonyms. In the context of the present invention, a gradient of a certain component (e.g. By) "along the X-direction" is typically determined as a difference between two such component values (By) measured at two locations spaced apart in the X-direction. In theory the gradient is calculated as the difference between two values divided by the distance "dx" between the sensor locations, but in practice the division by the distance is often omitted, because the measured signals need to be scaled anyway. Hence, in the context of the present invention, the magnetic field difference (ΔBx) and magnetic field gradient (dBx/dx) are used interchangeably.

In this application, horizontal Hall plates are typically referred to by H1, H2, etc. Signals from these horizontal Hall plates are typically referred to by h1, h2, etc.

In embodiments of the present invention where the "elastic deformable coupling" comprises an "inner shaft portion" and an "outer shaft portion", the first end EC1 of the elastic deformable coupling corresponds to a first end E1 of the inner shaft portion, and a second end EC2 of the elastic deformable coupling corresponds to a second end E4 of the outer shaft portion.

The present invention relates to torque sensor systems comprising an inner shaft portion and an outer shaft portion, for use in for example e-bikes, industrial applications, robotic applications, and automotive applications. The present invention also relates to methods of measuring a torque exerted upon such a shaft assembly.

The torque sensor system proposed comprises a first angular position sensor subsystem for determining a first angular position of a first rotatable part (e.g. connected to an inner shaft) relative to a first stationary part (e.g. mounted to a frame or housing), and comprises a second angular position sensor subsystem for determining a second angular position of a second rotatable part (e.g. connected to an outer shaft portion) relative to a second stationary part (e.g. mounted to said frame or housing). The first rotatable part is mechanically connected to the second rotatable part by means of an elastically deformable coupling, such as e.g. a shaft assembly comprising an inner shaft portion and an outer shaft portion, or such as a torque bar.

A processing circuit can determine a difference between this first and second angle, and a torque value can be derived from this difference, e.g. using a look-up table, or using a polynomial expression, or in any other suitable way. This processing circuit may be implemented in the sensor device, but that is not absolutely required for the invention to work.

The first/second rotatable part may comprise (i) a first/second multipole magnet; or (ii) a first/second ferromagnetic shape (e.g. having a plurality of teeth); or (iii) a first/second electrically conductive target (e.g. having a plurality of lobes). The first/second stationary part may comprise (i) a first set of magnetic sensors for measuring one or more magnetic field components or gradients; or (ii) a first/second set of magnetic probes; or (iii) a first/second set of coils. The use of gradient signals or coils makes the system more robust against external disturbance fields (such as e.g. the Earth magnetic field).

Optionally, the torque sensor system may further comprise a third angular position sensor subsystem, having a third stationary part and a third rotatable part. The third rotatable part may be fixedly connected to the first or to the second rotatable part, but have a different periodicity, for allowing an absolute angular position to be determined, e.g. using the nonius-principle.

These are the main underlying principles of the present invention.

In order to keep the description simple, the invention will be explained and illustrated mainly for a torque sensor system comprising two or three multipole ring magnets, but the present invention is not limited hereto.

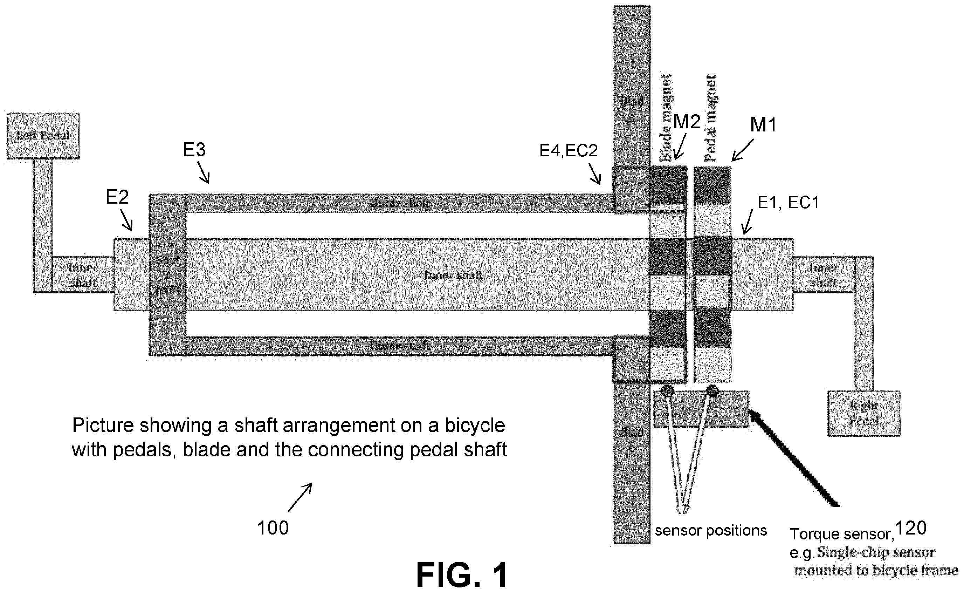

**FIG. 1** shows an illustrative example of a torque sensor system 100 according to an embodiment of the present invention. The torque sensor system comprises a shaft assembly comprising an inner shaft portion and an outer shaft portion, and two multi-pole magnets M1, M2, and a sensor device 120 for determining a torque.

The rotatable shaft assembly has an inner shaft portion (also referred to as "central shaft" portion) and an outer shaft portion (also referred to as "hollow shaft"). The inner shaft portion has a first end (E1) and a second end (E2). The outer shaft portion has a third end (E3) and a fourth end (E4). The second end (E2) is fixedly connected to the third end (E3). The first multipole magnet (M1) is fixedly connected to the first end (E1). The second multipole magnet (M2) is fixedly connected to the fourth end (E4). At least one or both of the inner shaft portion and the outer shaft portion is elastically deformable. When a torque is applied over the shaft assembly, the torque causes a rotation of the fourth end (E4) relative to the first end (E1).

Such a shaft assembly, or a similar shaft assembly is known for example from EP3112833(B1) and US2017003182(A1), both of which are hereby incorporated by reference in their entirety.

A magnetic sensor device 120, also referred to herein as "torque sensor" or "torque sensor device" is arranged in the vicinity of the first and second magnet M1, M2, e.g. radially outside of these magnets. The magnetic sensor device 120 may be implemented as multiple chips on the printed circuit board (not shown in FIG. 1), or as a single packaged device. The single packaged device may comprise one or more semiconductor substrates.

The magnets M1, M2 may be axially magnetized ring magnets. The first magnet has a first number of magnetic poles defining a first periodicity. The second magnet has a second number of magnetic poles defining a second periodicity. Preferably the second number of poles is equal to the first number of poles.

In a variant of FIG. 1, (not shown), the torque sensor system 100 does not comprise two multi-pole magnets M1, M2, but instead comprises a first and a second ferromagnetic shape (not shown), each having a predefined number of teeth or lobes or the like, defining a first and a second periodicity. Preferably the second periodicity is equal to the first periodicity. In this case, the torque sensor device 120 may comprise a first and a second set of magnetic probes, e.g. inductive sensor probes, back biased Hall effect sensor probes, back biased magneto resistance sensor probes, variable reluctance sensor probes, or magnetic sensor probes.

In another variant of FIG. 1, (not shown), the torque sensor system 100 does not comprise two multi-pole magnets M1, M2, but instead comprises a first and a second electrically conductive target (not shown), each having a predefined number of teeth or lobes or the like, defining a first and a second periodicity. Preferably the second periodicity is equal to the first periodicity. In this case, the torque sensor device 120 may comprise a first set of coils and a second set of coils, implemented on two separate PCB's or on a single PCB, for example a four-layer PCB or a six-layer PCB. Inductive angular sensors are known per se in the art, and hence need not be explained in full detail here. Suffice it to say that each set of coils preferably comprises at least one transmitter coil for generating an alternating magnetic field, and a plurality of at least two, or at least three receiver coils. The signals received by these receiver coils are modulated signals, which can be demodulated to provide e.g. quadrature signals or three-phase signals indicative of an angular position of the first/second target relative to the first/second set of coils.

**FIG. 2A** shows the two magnets of FIG. 1, which are rotatable relative to each other. The two magnets are connected to each other using an elastic deformable coupling (not shown in FIG. 2A), but see for example the coupling of FIG. 1 using an inner shaft and an outer shaft. FIG. 2A also shows a schematic representation of a sensor arrangement 200 comprising a sensor device 220 having two sensor positions P1, P2. In each of these sensor positions P1, P2 two orthogonal magnetic field components are measured, namely an in-plane component Bx or By oriented in a direction X or Y located in a virtual plane XY parallel to a tangential to a surface of the magnet, and an out-of-plane component Bz.

In the example shown in FIG. 2A, the X, Y and Z direction of the sensor device 220 corresponds to a circumferential direction C, an axial direction A, and a radial direction R of the magnet, respectively.

Formulas for calculating a first angle θ1 and a second angle θ2 based on these components, are shown. A signal or value indicative of the torque exerted upon the shaft assembly can be calculated as a function of the difference between the first angle θ1 and the second angle θ2, for example proportional to the angular difference, or using a look-up table, or using a polynomial expression, or in any other suitable way.

The number of pole pairs of the first magnet M1 is equal to the number of pole pairs of the second magnet M2. The number of pole pairs may be a value in the range from 4 to 32, for example at least 4, at least 6, at least 8, at least 10, at least 12, at least 14, at least 16.

In a variant of FIG. 2A (not shown), the magnets M1, M2 are axially magnetized (i.e. in the A-direction), and the sensor device 220 is configured to measure an in-plane component By and an out-of-plane component Bz in each of the two sensor locations P1, P2.

In a variant of FIG. 2A, the elastic coupling between the first and second magnet is not established by means of an inner shaft and an outer shaft, but is established by other means, for example by means of a torsion bar (not shown).

**FIG. 2B** and **FIG. 2C** are schematic representations of sensor arrangements or sensor devices that can be used in the system of FIG. 2A. The distance Δy may be substantially equal to the axial distance "da" between centers of the respective tracks, but that is not absolutely required, and the distance Δy may also be smaller or larger than the distance "da". Such a sensor arrangement can be implemented in a semiconductor substrate, e.g. a silicon substrate.

**FIG. 2B** shows a possible sensor arrangement that can be used in the system of FIG. 2A, comprising two 2D magnetic sensors (also referred to as "2D magnetic pixels"), wherein each sensor comprises an IMC and two horizontal Hall elements arranged near the periphery of the IMC, and 180° spaced apart from each other. The first sensor can measure a Bx1 component (e.g. by subtracting the signals obtained from the two Horizontal Hall elements) and can measure a Bz1 component (e.g. by adding the signals obtained from the two Horizontal Hall elements), at the first sensor location (at the centre of IMC1). The second sensor can measure a Bx2 and a Bz2 component at the second sensor location (at the center of IMC2).

**FIG. 2C** shows another possible sensor arrangement that can be used in the system of FIG. 2A, comprising two 2D magnetic sensors (or "2D magnetic pixels"), wherein each sensor comprises a horizontal Hall element (e.g. H1, H2) and a vertical Hall element (e.g. V1, V2). The first sensor comprises H1 and V1, and is capable of measuring Bx1 and Bz1 at the first sensor location P1, located substantially between H1 and V1. The first sensor comprises H2 and V2, and is capable of measuring Bx2 and Bz2 at the second sensor location P2, located substantially between H2 and V2.

In a variant of FIG. 2C (not shown), each sensor comprises two vertical Hall elements, preferably arranged such that the horizontal Hall element is located in the middle between the two vertical Hall elements. The signals of the two vertical Hall elements are preferably added or averaged.

It is of course also possible to use two 3D magnetic pixels, each comprising for example a circular IMC and four horizontal Hall elements, spaced apart by multiples of 90°, or each comprising for example a central Horizontal Hall element and four vertical Hall elements (two oriented in the X-direction, and two oriented in the Y-direction). Such a sensor is capable of determining Bx, By, Bz at each sensor location. In case the magnets are axially magnetized, the Bx signals may be ignored. In case the magnets are radially magnetized, the By signals may be ignored.

In a variant (not shown), the two ring magnets are axially magnetized, and the sensor device is configured to measure a Bx1 and a By1 component at said first position P1, and to measure a Bx2 and a By2 component at said second position P2. These components may be measured using four vertical Hall elements (two of them having an axis of maximum sensitivity in the X direction, and two of them having an axis of maximum sensitivity in the Y-direction), or using four magneto-resistive elements (e.g. XMR, TMR, AMR, GMR). The same or similar formulas as shown in FIG. 2A are applicable, after replacing Bz1 by By1, and Bz2 by By2.

**FIG. 3** shows a flowchart of a method 300 of determining or estimating a torque exerted upon a torque sensor system as shown in FIG. 2A. The method comprises the steps of:
a) providing in step 301 two multipole magnets as illustrated in FIG. 2A, comprising a first magnet (M1) and a second magnet (M2), which are rotatable relative to each other, and connected to each other using an elastic deformable coupling;
b) measuring in step 302 two orthogonal magnetic field components (e.g. Bx1, Bz1 or By1, Bz1 or Bx1, By1) at a first sensor location (P1) facing the first magnet (M1), and determining a first angle (θ1) based on these magnetic field components, e.g. as a function of a ratio of these components;
c) measuring in step 303 two orthogonal magnetic field components (e.g. Bx2, Bz2 or By2, Bz2 or Bx2, By2) at a second sensor location (P2) facing the second magnet (M2), and determining a second angle (θ2) based on these magnetic field components, e.g. as a function of a ratio of these components;
d) determining in step 304 a difference between the first angle (θ1) and the second angle (θ2), and providing an estimate of a torque exerted upon said coupling as a function of this angular difference, e.g. proportional to this angular difference, or using a look-up table, or using a polynomial expression, or in any other suitable way.

The method may comprise a further step of calculating a speed of rotation of the magnets relative to the sensor device 220, or relative to a frame or a housing the sensor device is mounted to (not explicitly shown in FIG. 2A).

In case the modified arctangent function is used, the values of C and K may be determined during design, or by simulation, or may be determined in a calibration test, and may be stored in a non-volatile memory of the sensor device.

**FIG. 4A** shows the two magnets M1, M2 of FIG. 1, which are rotatable relative to each other. The two magnets are connected to each other using an elastic deformable coupling (not shown in FIG. 4A), but see for example the coupling of FIG. 1 using an inner shaft and an outer shaft. FIG. 4A also shows a schematic representation of a sensor arrangement or a sensor device with six sensor positions P1 to P6. The system 400 of FIG. 4A can be seen as a variant of the system 200 of FIG. 2A. The main difference is that the sensor arrangement of FIG. 4A has six sensor positions P1 to P6 where a single magnetic field component is measured, e.g. using a 1D magnetic pixel, e.g. a horizontal Hall element without an IMC. In the example shown, in each sensor location an out-of-plane component Bz is measured. As can be seen, the sensor locations are spaced apart by a distance Δx in the X-direction, parallel to a tangential to a circumferential direction of the magnets, and are spaced apart in the Y-direction by a distance Δy, parallel to the axial direction A of the magnets. Importantly, the spacing Δx may correspond to the pole pitch "dp", in which case the first angle (θ1) and the second angle (θ2) can be calculated using an arctangent function, but that is not absolutely required, and the spacing Δx may be larger or smaller than the pole pitch "dp". In that case, a "modified arctangent function" can be used (see formulas in FIG. 4B). Also, the spacing Δy does not need to match the axial dimensions of the magnets, although it may.

In an embodiment, the spacing Δx is smaller than 20% of the pole pitch "dp".

In a variant, not shown, not six times Bz is measured, but six times Bx or six times By. This can be implemented e.g. using six vertical Hall elements, or using six magneto-resistive elements (e.g. AMR, GMR, TMR, XMR). Similar formulas as shown in FIG. 4B are applicable, after replacing Bz by Bx or By.

In case the modified arctangent function is used, the values of C and K may be determined during design, or by simulation, or may be determined in a calibration test, and may be stored in a non-volatile memory of the sensor device.

In a variant of FIG. 4A, the elastic coupling between the first and second magnet is not established by means of an inner shaft and an outer shaft, but is established by other means, for example by means of a torsion bar (not shown).

In a variant of FIG. 4A, the sensor locations P3 and P6 are omitted, and the sensor locations P1 and P2 are spaced by 40% to 60% of the pole pitch, and the sensor locations P4 and P5 are also spaced by 40% to 60% of the pole pitch, and the first angle is calculated as arctan(Bz1/Bz2), and the second angle is calculated as arctan(Bz4/Bz5). In a further variant, the sensor device measures a component Bx at the four sensor locations instead of Bz, and the first angle would be calculated as arctan(Bx1/Bx2) and the second angle would be calculated as arctan(Bx3/Bx4). In another further variant, the sensor device measures a component By at the four sensor locations instead of Bz, and the first angle would be calculated as arctan(By1/By2) and the second angle would be calculated as arctan(By3/By4).

**FIG. 4B** is a schematic representation of a particular sensor arrangement or a particular sensor device that can be used in the system of FIG. 4A. This sensor arrangement comprises six horizontal Hall elements. Formulas for determining a first angle θ1, a second angle θ2, and a torque are indicated.

In a variant, not shown, the sensor arrangement comprises six vertical Hall elements, oriented with their axis of maximum sensitivity in a circumferential direction C of the magnets (i.e. in the X-direction of the semiconductor substrate).

**FIG. 5** shows a flowchart of a method 500 of determining or estimating a torque exerted upon a system as shown in FIG. 4A. This method can be seen as a variant of the method 300 of FIG. 3. The method 500 comprises the following steps:
a) providing in step 501 two multipole magnets as illustrated in FIG. 4A, comprising a first magnet (M1) and a second magnet (M2), which are rotatable relative to each other, and connected to each other using an elastic deformable coupling;
b) measuring in step 502 three magnetic field components, for example (Bx1,Bx2,Bx3) or (Bz1,Bz2,Bz3) or (By1,By2,By3) at three sensor locations (P1, P2, P3) facing the first magnet (M1), and determining two pairwise differences between these components, and determining a first angle (θ1) based on these pairwise differences, e.g. as a function of a ratio of these pairwise differences, e.g. as an arctangent function of this ratio, or as a modified arctangent function of this ratio;
c) measuring in step 503 three magnetic field components, for example (Bx4,Bx5,Bx6) or (Bz4,Bz5,Bz6) or (By4,By5,By6) at three sensor locations (P4, P5, P6) facing the second magnet (M2), and determining two pairwise differences between these components, and determining a second angle (θ2) based on these pairwise differences, e.g. as a function of a ratio of these pairwise differences, e.g. as an arctangent function of this ratio, or as a modified arctangent function of this ratio;
d) determining in step 504 a difference between the first angle (θ1) and the second angle (θ2), and providing an estimate of a torque exerted upon said coupling as a function of this angular difference, e.g. proportional to this angular difference, or using a look-up table, or using a polynomial expression.

The method may comprise a further step of calculating a speed of rotation of the magnets relative to the sensor device 420, or relative to a frame or a housing the sensor device 420 is mounted to.

In case the "modified arctangent function" is used, the values of C and K may be determined during design, or by simulation, or may be determined in a calibration test, and may be stored in a non-volatile memory of the sensor device.

**FIG. 6A** shows the two magnets M1, M2 of FIG. 1, which are rotatable relative to each another. The two magnets are connected to each other using an elastic deformable coupling (not shown in FIG. 6A), but see for example the coupling of FIG. 1 using an inner shaft and an outer shaft. FIG. 6A also shows a schematic representation of a sensor arrangement or a sensor device 620 with four sensor positions. This can be seen as a variant of the system of FIG. 2A, having four sensor locations P1 to P4, spaced apart in the X-direction by a distance Δx which may be substantially equal to, larger or smaller than the pole pitch "dp", and spaced apart in the Y-direction by a distance Δy which may be substantially equal to, larger or smaller than a distance "da" between center-lines of the magnets M1, M2.

At each sensor position, an in-plane magnetic field component Bx, and an out-of-plane magnetic field component Bz is measured.

It is an advantage that the distance Δx may be much smaller than the pole pitch "dp", e.g. (Δx/dp)<30%, or <25%, or <20%, or <15% or <10%.

The distance Δy is preferably approximately equal to the axial distance "da", but (Δy) may be slightly smaller or slightly larger.

In a variant of FIG. 6A, at each sensor position, an in-plane magnetic field component By, and an out-of-plane magnetic field component Bz is measured.

In another variant of FIG. 6A, at each sensor position, two in-plane magnetic field components Bx, By are measured. This can e.g. be achieved using four sets of two vertical Hall elements (one oriented in the X direction, another oriented in the Y-direction), or using four sets of two MR elements (one oriented in the X direction, another oriented in the Y-direction).

In another or a further variant of FIG. 6A, the elastic coupling between the first and second magnet is not established by means of an inner shaft and an outer shaft (as illustrated in FIG. 1), but is established by other means, for example by means of a torsion bar (not shown).

**FIG. 6B** and **FIG. 6C** are schematic representations of particular sensor arrangements or particular sensor devices that can be used in the system of FIG. 6A. In FIG. 6B, each sensor comprises an IMC and two horizontal Hall elements arranged near a periphery of the IMC, and spaced 180° apart. In FIG. 6C, each sensor comprises a horizontal Hall element and a vertical Hall element. Formulas for determining a first angle, a second angle, and a torque are shown.

In a variant of FIG. 6B, each sensor is a 3D magnetic pixel comprising an IMC and four horizontal Hall elements.

In a variant of FIG. 6C (not shown), each sensor comprises two vertical Hall elements, preferably arranged such that the horizontal Hall element is located in the middle between the two vertical Hall elements. The signals of the two vertical Hall elements are preferably added or averaged. This provides a better signal-to-noise ratio.

It is of course also possible to use two 3D magnetic pixels, each comprising for example a circular IMC and four horizontal Hall elements, spaced apart by multiples of 90°, or each comprising for example a central Horizontal Hall element and four vertical Hall elements (two oriented in the X-direction, and two oriented in the Y-direction). Such a sensor is capable of determining Bx, By, Bz at each sensor location. In case the magnets are axially magnetized, the Bx signals may be ignored. In case the magnets are radially magnetized, the By signals may be ignored.

**FIG. 7** shows a flowchart of a method 700 of determining or estimating a torque exerted upon a system as shown in FIG. 6A. This can be seen as a variant of the method of FIG. 3, and as a variant of the method of FIG. 5. The method 700 comprises the steps of:
a) providing in step 701 two multipole magnets as illustrated in FIG. 6A, comprising a first magnet (M1) and a second magnet (M2), which are rotatable relative to each other, and connected to each other using an elastic deformable coupling;
b) measuring in step 702 two orthogonal magnetic field components (e.g. Bx1,Bz1 or Bx1,By1 or By1,Bz1) and (Bx2,Bz2 or Bx2,By2 or By2,Bz2) at each of two sensor locations (P1, P2) facing the first magnet (M1), and determining a first and a second difference (e.g. dBx12,dBz12) between these components, and determining a first angle (θ1) based on a ratio of these differences, e.g. as a function (e.g. an arctangent function) of a ratio of these differences;
c) measuring in step 703 two orthogonal magnetic field components (e.g. Bx3,Bz3 or Bx3,By3 or By3,Bz3) and (e.g. Bx4,Bz4 or Bx4,By4 or By4,Bz4) at each of two sensor locations (P3, P4) facing the second magnet (M2), and determining a third and a fourth difference (e.g. dBx34, dBz34) between these components, and determining a second angle (θ2) based on a ratio of these differences, e.g. as a function (e.g. an arctangent function) of a ratio of these differences;
d) determining in step 704 a difference between the first angle (θ1) and the second angle (θ2), and providing an estimate of a torque exerted upon said coupling as a function of this angular difference, e.g. proportional to this angular difference, or using a look-up table, or a polynomial expression.

The method may comprise a further step of calculating a speed of rotation of the magnets relative to the sensor device 620, or relative to a frame or a housing the sensor device 620 is mounted to.

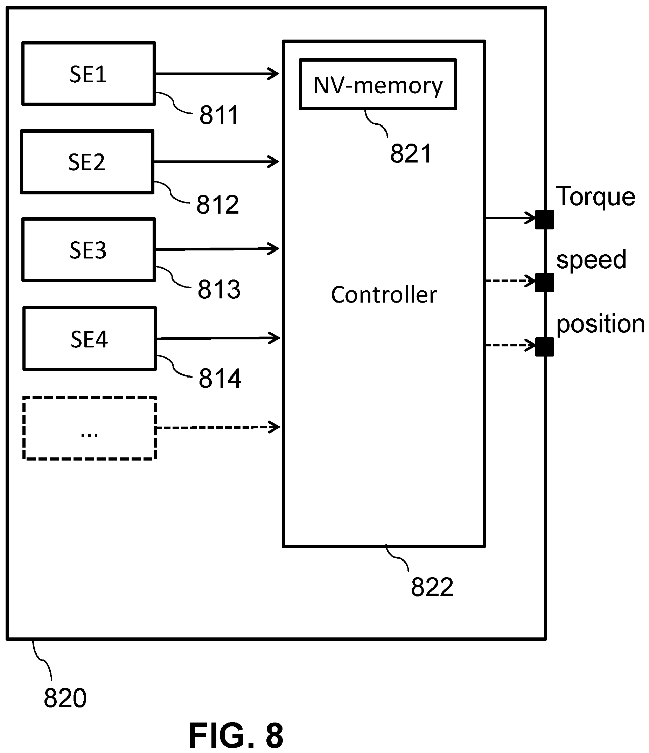

**FIG. 8** is a high-level block-diagram of a sensor device 820 that can be used in embodiments of the present invention. This Figure is provided for completeness only. It shows that the sensor device 820 comprises one or more sensor elements SE1, SE2, SE3, SE4, etc. each sensor element provides a signal to a processing circuit, e.g. to a controller, e.g. a programmable microcontroller.

While not shown, the sensor device 820 may have other circuits, such as e.g. biasing and readout-circuitry, amplifiers, filters, etc. Such circuits are well known in the art, are not the focus of the present invention, and hence do not need to be explained in more detail here.

If the processing circuit 822 is configured to perform the method of FIG. 3, the sensor device 820 may comprise a sensor arrangement as shown in FIG. 2A or FIG. 2B or FIG. 2C, or variants thereof, e.g. as described above.

If the processing circuit 822 is configured to perform the method of FIG. 5, the sensor device 820 may comprise a sensor arrangement as shown in FIG. 4A or FIG. 4B, or variants thereof, e.g. as described above.

If the processing circuit 822 is configured to perform the method of FIG. 6, the sensor device 820 may comprise a sensor arrangement as shown in FIG. 6A or FIG. 6B or FIG. 6C, or variants thereof, e.g. as described above.

The sensor device 820 may comprise a non-volatile memory 821, which may store one or more parameters, e.g. parameters for converting the angular difference value into a torque value, and/or the value of C and K of the modified arctangent function (if used).

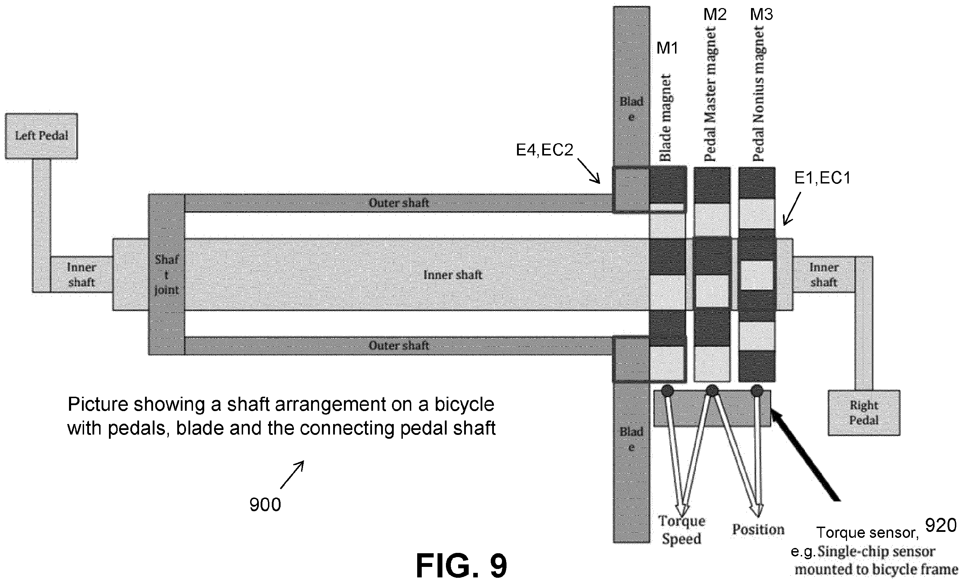

**FIG. 9** shows an illustrative example of a torque sensor system 900 according to an embodiment of the present invention. This torque sensor system 900 can be seen as a variant of the system of FIG. 1. The main difference between the torque sensor system 900 of FIG. 9 and the torque sensor system 100 of FIG. 1 is that the torque sensor system 900 comprises three multi-poles magnets M1, M2, M3 instead of only two. The first magnet M1 has the same number of pole pairs as the second magnet M2, but the third magnet M3 has a different number of pole pairs than M1 and M2, e.g. one pair more or one pair less. This allows the nonius-principle to be applied.

The torque sensor system 900 comprises a sensor device 920, which is capable of determining a torque, but is further configured for determining an absolute position of the inner shaft, typically within a tolerance margin in the order of about ±5°.

**FIG. 10** shows the three magnets M1 to M3 of FIG. 9, where M2 and M3 are fixedly connected to each other, and where M1 is rotatable relative to M2 and M3, and shows a schematic representation of a possible sensor arrangement.

When using the same measurement principles as illustrated in FIG. 6A, the sensor device 1020 would be similar to the sensor device 620, but would further comprise two sensor locations P5 and P6 arranged to face the third magnet M3, and configured for measuring signals (Bx5, Bz5) and (Bx6, Bz6) respectively; and its processing circuit would be further configured to calculate a third angle (θ3) based on the signals Bx5, Bz5, Bx6, Bz6, and would be further configured for determining an absolute position of the magnets M2 and M3 (and thus of the inner shaft), based on the value of the second angle (θ2) and the third angle (θ3).

When using the same measurement principles as illustrated in FIG. 2A, the sensor device 920 would be similar to the sensor device 220, but would further comprise a third sensor location P3 arranged to face the third magnet M3, and configured for measuring signals Bx3 and Bz3; and its processing circuit would be further configured to calculate a third angle (θ3) based on the signals Bx3 and Bz3, and would be further configured for determining an absolute position of the magnets M2 and M3 (and thus of the inner shaft), based on the value of the second angle (θ2) and the third angle (θ3).

When using the same measurement principles as illustrated in FIG. 4A, the sensor device 920 would be similar to the sensor device 420, but would further comprise three sensor locations P7 to P9 arranged to face the third magnet M3, and configured for measuring signals Bz7 to Bz7; and its processing circuit 822 would be further configured to calculate a third angle (θ3) based on the signals Bz7 to Bz9, and would be further configured for determining an absolute position of the magnets M2 and M3 (and thus of the inner shaft), based on the value of the second angle (θ2) and the third angle (θ3).

In a variant, the sensor device is configured for measuring (Bx1,By1) at position P1, (Bx2,By2) at position P2, (Bx3,By3) at position P3, (Bx4,By4) at position P4, (Bx5,By5) at position P5, and (Bx6,By6) at position P6. This can e.g. be achieved using a plurality of vertical Hall elements, or using a plurality of MR elements.

In a variant, the sensor device is configured for measuring (By1,Bz1) at position P1, (By2,Bz2) at position P2, (By3,Bz3) at position P3, (By4,Bz4) at position P4, (By5,Bz5) at position P5, and (By6,Bz6) at position P6. This can e.g. be achieved using a plurality of vertical Hall elements, or using a plurality of MR elements.

**FIG. 11** shows a flowchart of a method of determining or estimating a torque exerted upon a system as shown in FIG. 10, and for determining an absolute angle. This method can be seen as a variant of the method of FIG. 7. The method 1100 comprises the steps of:
a) providing in step 1101 three multipole magnets as illustrated in FIG. 9, comprising a first magnet (M1) and a second magnet (M2), which are rotatable relative to each other, and connected to each other using an elastic deformable coupling, and a third magnet (M3) fixedly connected to the second magnet (M2) but having a different number of poles;
b) measuring in step 1102 two orthogonal magnetic field components (Bx1,Bz1) and (Bx2, Bz2) at each of two sensor locations (P1,P2) facing the first magnet (M1), and determining a first and a second difference (dBx12, dBz12) between these components, and determining a first angle (θ1) based on a ratio of these differences, e.g. as a function of a ratio of these differences;
c) measuring in step 1103 two orthogonal magnetic field components (Bx3,Bz3) and (Bx4, Bz4) at each of two sensor locations (P3,P4) facing the second magnet (M2), and determining a third and a fourth difference (dBx34, dBz34) between these components, and determining a second angle (θ2) based on a ratio of these differences, e.g. as a function of a ratio of these differences;
d) determining in step 1104 a difference between the first and the second angle, and providing an estimate of a torque exerted upon said coupling as a function of this angular difference, e.g. proportional to this angular difference;
e) measuring in step 1105 two orthogonal magnetic field components (Bx5,Bz5) and (Bx6, Bz6) at each of two sensor locations (P5,P6) facing the third magnet (M3), and determining a third angle (θ3), e.g. as a function of a ratio of pairwise differences (dBx56, dBz56);
f) determining in step 1106 an absolute angular position based on the third angle (θ3) and on one or both of the first and second angle (θ1, θ2).

The method may comprise a further step of calculating a speed of rotation of the magnets relative to the housing, e.g. by determining a time derivative of the first or second angle θ1, θ2.

A variant of this method using a sensor device similar to that of FIG. 2A, is also contemplated. This method can be seen as a variant of the method 300 shown in FIG. 3, with two additional steps, similar to step 1105 and step 1106 of FIG. 11.

A variant of this method using a sensor device similar to that of FIG. 4A, is also contemplated. This method can be seen as a variant of the method 500 shown in FIG. 5, with two additional steps, similar to step 1105 and step 1106 of FIG. 11.

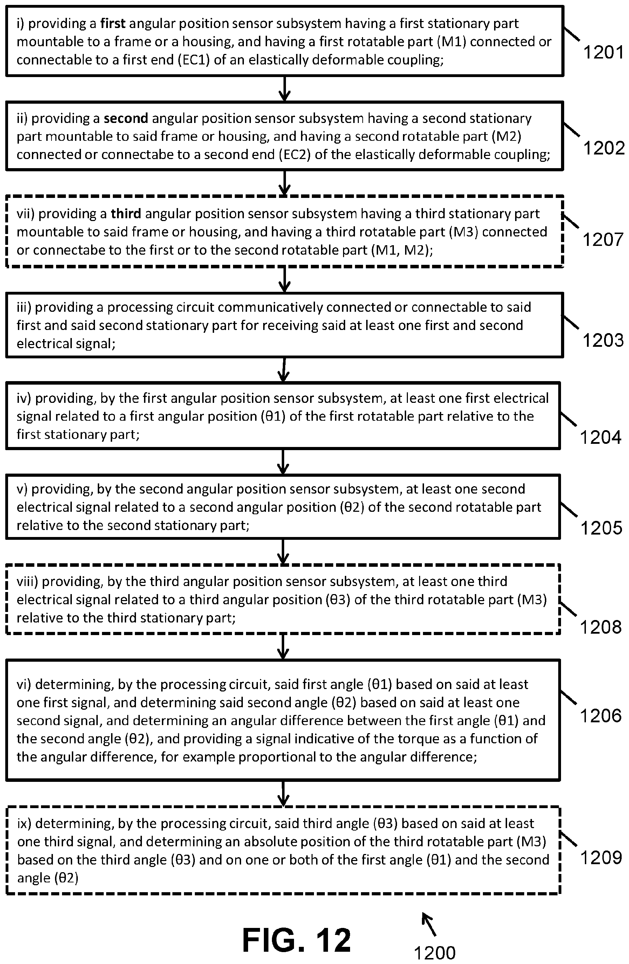

**FIG. 12** shows a flowchart of a method 1200 of determining a torque exerted upon an elastically deformable coupling, and for optionally also determining an absolute angle. This method can be seen as a more generic method, which not only works with two or three multipole magnets, but also works with other angular position sensor subsystems, e.g. with an inductive angular subsystem.

The method 1200 of determining a torque exerted upon an elastically deformable coupling (e.g. on a torque bar, or on a shaft comprising an inner shaft portion and an outer shaft portion) having a first end (E1) and a second end (E4), the method comprising the steps of:
i) providing (1201) a first angular position sensor subsystem having a first stationary part mountable to a frame or a housing, and having a first rotatable part (M1) connected or connectable to said first end (E1) of the elastically deformable coupling;
ii) providing (1202) a second angular position sensor subsystem having a second stationary part mountable to said frame or housing, and having a second rotatable part (M2) connected or connectable to the second end (E4) of the elastically deformable coupling;
iii) providing (1203) a processing circuit communicatively connected or connectable to said first and said second stationary part for receiving said at least one first and second electrical signal;
iv) providing (1204), by the first angular position sensor subsystem, at least one first electrical signal related to a first angular position (θ1) of the first rotatable part relative to the first stationary part;
v) providing (1205), by the second angular position sensor subsystem, at least one second electrical signal related to a second angular position (θ2) of the second rotatable part relative to the second stationary part;
vi) determining (1206), by the processing circuit, said first angle (θ1) based on said at least one first signal, and determining said second angle (θ2) based on said at least one second signal, and determining an angular difference between the first angle (θ1) and the second angle (θ2), and providing a signal indicative of the torque as a function of the angular difference, for example proportional to the angular difference, e.g. taking into account a factor related to a stiffness of the elastically deformable coupling.

The method may also comprise a step of determining an angular speed, e.g. by determining a time derivative of the first angle (θ1) or the second angle (θ2).

In a variant, the method is furthermore capable of determining an absolute position. his method would furthermore comprise the following steps:
vii) providing (1207) a third angular position sensor subsystem having a third stationary part mountable to the frame or housing, and having a third rotatable part (M3) connected or connectable to the first or to the second rotatable part (M1, M2);
viii) providing (1208), by the third angular position sensor subsystem, at least one third electrical signal related to a third angular position (θ3) of the third rotatable part (M3) relative to the third stationary part;
ix) determining (1209), by the processing circuit, said third angle (θ3) based on said at least one third signal, and determining an absolute position of the third rotatable part (M3) based on the third angle (θ3) and on one or both of the first angle (θ1) and the second angle (θ2), e.g. based on θ1 and θ3, or based on θ1 and θ2, e.g. using the nonius principle.

The third rotatable part preferably has a third periodicity different from the first periodicity and different from the second periodicity.

## Claims

1. A torque sensor system, for determining a torque exerted upon an elastically deformable coupling having a first end (E1) and a second end (E4), the torque sensor system comprising:
- a first angular position sensor subsystem having a first stationary part mountable to a frame or a housing, and having a first rotatable part (M1) connected or connectable to said first end (EC1, E1) of the elastically deformable coupling, the first angular position sensor subsystem being configured for providing at least one first electrical signal related to a first angular position (θ1) of the first rotatable part relative to the first stationary part;
- a second angular position sensor subsystem having a second stationary part mountable to said frame or housing, and having a second rotatable part (M2) connected or connectable to the second end (EC2, E4) of the elastically deformable coupling, the second angular position sensor subsystem being configured for providing at least one second electrical signal related to a second angular position (θ2) of the second rotatable part relative to the second stationary part;
- a processing circuit communicatively connected or connectable to said first and said second stationary part for receiving said at least one first and second electrical signal, and configured for determining said first angle (θ1) based on said at least one first signal, and for determining said second angle (θ2) based on said at least one second signal, and for determining an angular difference between the first angle (θ1) and the second angle (θ2), and for providing a signal indicative of the torque as a function of the angular difference.

2. A torque sensor according to claim,
wherein the first end (EC1) of the elastically deformable coupling is located in the vicinity of the second end (EC2) of the elastically deformable coupling; and the elastically deformable coupling is located mainly in a space outside of the first and second end (EC1, EC2);
or wherein the first stationary part has first sensing means and the second stationary part has second sensing means, and the first sensing means and the second sensing means are both located in the vicinity of the first end of the elastically deformable coupling.

3. A torque sensor system according to any of the previous claims,
wherein the first rotatable part (M1) comprises a first multipole ring magnet (M1) having a first periodicity;
and wherein the second rotatable part (M2) comprises a second multipole ring magnet (M2) having a second periodicity;
and wherein the first stationary part comprises one or more magnetic sensors configured for measuring characteristics of the magnetic field generated by the first multipole magnet (M1), and configured for providing a first signal or a first set of electrical signals related to an angular position of the first multipole magnet (M1) relative to the first stationary part;
and wherein the second stationary part comprises one or more magnetic sensors configured for measuring characteristics of the magnetic field generated by the second multipole magnet (M2), and configured for providing a second signal or a second set of electrical signals related to an angular position of the second multipole magnet (M2) relative to the second stationary part;
and wherein the processing circuit is further configured for determining the first angle (θ1) based on the first signal or the first set of electrical signals, and is further configured for determining the second angle (θ2) based on the second signal or the second set of electrical signals.

4. A torque sensor device according to any of the previous claims,
wherein the first stationary part is configured for measuring a magnetic field component (Bx1) in a direction parallel to an imaginary plane tangential to a surface of the first magnet (M1) at a first sensor location (P1), and is configured for measuring a magnetic field component (Bz1) in a radial direction of the first magnet (M1) at the first sensor location (P1); and
wherein the second stationary part is configured for measuring a magnetic field component (Bx2) in a direction parallel to an imaginary plane tangential to a surface of the second magnet (M2) at a second sensor location (P2) spaced from the first sensor location (P1), and is configured for measuring a magnetic field component (Bz2) in a radial direction of the second magnet (M2) at the second sensor location (P2).

5. A torque sensor system (400) according to any of the claims 1 to 3,
wherein the first stationary part is configured for measuring two parallel magnetic field components (Bz1, Bz2) at a first and a second sensor location (P1, P2) facing the first magnet (M1); and wherein the second stationary part is configured for measuring two parallel magnetic field components (Bz4, Bz5) at a third and a fourth sensor location (P4, P5) facing the second magnet (M2); or
wherein the first stationary part is configured for measuring three parallel magnetic field components (Bz1, Bz2, Bz3) at a first, second and third sensor location (P1, P2, P3) facing the first magnet (M1); and wherein the second stationary part is configured for measuring three parallel magnetic field component (Bz4, Bz5, Bz6) at a fourth, fifth and sixth sensor location (P4, P5, P6), facing the second magnet (M2).

6. A torque sensor system (600) according to any of the claims 1 to 3,
wherein the first stationary part is configured for measuring two orthogonal magnetic field components (Bx1, Bz1) at a first sensor location (P1) and two orthogonal magnetic field components (Bx2, Bz2) at a second sensor location (P2) spaced from the first sensor location, both the first and second sensor location (P1, P2) facing the first magnet (M1); and
wherein the second stationary part is configured for measuring two orthogonal magnetic field components (Bx3, Bz3) at a third sensor location (P3) and two orthogonal magnetic field components (Bx4, Bz4) at a fourth sensor location (P4) spaced from the third sensor location, both the third and fourth sensor location (P3, P4) facing the second magnet (M2); and
wherein the processing circuit is configured for determining a first pairwise difference (dBx12) and a second pairwise difference (dBz12) between a signal measured at the first sensor location and a signal measured at the second sensor location, and for providing the first angle (θ1) as a function of a ratio of the first and the second pairwise difference (dBx12, dBz12); and
wherein the processing circuit is configured for determining a third pairwise difference (dBx34) and a fourth pairwise difference (dBz34) between a signal measured at the third sensor location and a signal measured at the fourth sensor location, and for providing the second angle (θ2) as a function of a ratio of the third and the fourth pairwise difference (dBx34, dBz34).

7. A torque sensor system according to any of the claims,
wherein the first and the second stationary part each comprise at least one magnetic sensor situated in one (P1) or two (P1, P2) or three (P1, P2, P3) sensor locations, each magnetic sensor configured for measuring one or more magnetic field components (Bx, By, Bz) at each sensor location.

8. A torque sensor system according to any of the previous claims,
further comprising a third angular position sensor subsystem having a third stationary part mountable to the frame or housing, and having a third rotatable part (M3), wherein the third rotatable part has a third periodicity;
wherein the third rotatable part (M3) is either fixedly connected to the first rotatable part (M1) and thus rotatable relative to the second rotatable part (M2), or is fixedly connected to the second rotatable part (M2) and thus rotatable relative to the first rotatable part (M1);
and wherein the third angular position sensor subsystem is configured for providing at least one third electrical signal related to a third angular position (θ3) of the third rotatable part (M3) relative to the third stationary part;
and wherein the processing circuit is further configured for determining said third angle (θ3) based on said at least one third signal, and for determining an absolute position of the third rotatable part (M3) based on the third angle (θ3) and on one or both of the first angle (θ1) and the second angle (θ2).

9. A torque sensor system according to claim 1 or 2,
wherein the first angular position sensor subsystem comprises a first permanent magnet, and wherein the first rotatable part comprises a first ferromagnetic shape having a first geometric profile with a first periodicity;
wherein the second angular position sensor subsystem comprises a second permanent magnet, and wherein the second rotatable part comprises a second ferromagnetic shape having a second geometric profile with a second periodicity;
and wherein the first stationary part comprises a first set of magnetic probes for sensing signals provided by the first ferromagnetic shape, and configured for providing a first set of electrical signals related to an angular position of the first ferromagnetic shape relative to the first stationary part;
and wherein the second stationary part comprises a second set of magnetic probes for sensing signals provided by the second ferromagnetic shape, and configured for providing a second set of electrical signals related to an angular position of the second ferromagnetic shape relative to the second stationary part;
and wherein the processing circuit is further configured for determining the first angle (θ1) based on the first set of electrical signals, and is further configured for determining the second angle (θ2) based on the second set of electrical signals.

10. A torque sensor system according to claim 1 or 2,
wherein the first rotatable part comprises a first electrically conductive target having a first geometric profile with a first periodicity;
wherein the second rotatable part comprises a second electrically conductive target having a second geometric profile with a second periodicity;
and wherein the first stationary part comprises a first set of coils comprising: at least one transmitter coil for generating a first alternating magnetic field, and at least two or at least three receiver coils configured for receiving the first alternating magnetic field modulated by the first target, and configured for providing a first set of electrical signals related to an angular position of the first target relative to the first set of coils;
and wherein the second stationary part comprises a second set of coils comprising: at least one transmitter coil for generating a second alternating magnetic field, and at least two or at least three receiver coils configured for receiving the second alternating magnetic field modulated by the second target, and configured for providing a second set of electrical signals related to an angular position of the second target relative to the second set of coils;
and wherein the processing circuit is further configured for determining the first angle (θ1) based on the first set of electrical signals, and is further configured for determining the second angle (θ2) based on the second set of electrical signals.

11. A torque sensor system according to any of the previous claims,
wherein the elastically deformable coupling comprises an inner shaft portion mechanically connected to a concentric outer shaft portion;
the inner shaft portion having a first end (E1) and a second end (E2);
the outer shaft portion also having a first end (E3) and a second end (E4);
wherein the first end (E1) of the inner shaft portion corresponds to the first end (EC1) of the elastically deformable coupling;
wherein the second end (E4) of the outer shaft portion corresponds to the second end (EC2) of the elastically deformable coupling;
and wherein the second end (E2) of the inner shaft portion is fixedly or rigidly connected to the first end (E3) of the outer shaft portion.

12. The torque sensor system according to claim 11,
further comprising one or more of the following:
- a first pedal connected to the second end (E2) of the inner shaft portion or to the third end (E3) of the outer shaft portion;
- a second pedal connected to the first end (E1) of the inner shaft portion;
- a sprocket or blade connected to the fourth end (E4) of the outer shaft portion.

13. A method of determining a torque exerted upon an elastically deformable coupling having a first end (E1) and a second end (E4), the method comprising the steps of:
i) providing a first angular position sensor subsystem having a first stationary part mountable to a frame or a housing, and having a first rotatable part (M1) connected or connectable to said first end (E1) of the elastically deformable coupling;
ii) providing a second angular position sensor subsystem having a second stationary part mountable to said frame or housing, and having a second rotatable part (M2) connected or connectable to the second end (E4) of the elastically deformable coupling;
iii) providing a processing circuit communicatively connected or connectable to said first and said second stationary part for receiving said at least one first and second electrical signal;
iv) providing, by the first angular position sensor subsystem, at least one first electrical signal related to a first angular position (θ1) of the first rotatable part relative to the first stationary part;
v) providing, by the second angular position sensor subsystem, at least one second electrical signal related to a second angular position (θ2) of the second rotatable part relative to the second stationary part;
vi) determining, by the processing circuit, said first angle (θ1) based on said at least one first signal, and determining said second angle (θ2) based on said at least one second signal, and determining an angular difference between the first angle (θ1) and the second angle (θ2), and providing a signal indicative of the torque as a function of the angular difference.

14. A method according to claim 13, further comprising the steps of:
vii) providing a third angular position sensor subsystem having a third stationary part mountable to the frame or housing, and having a third rotatable part (M3) connected or connectable to the first or to the second rotatable part (M1, M2);
viii) providing, by the third angular position sensor subsystem, at least one third electrical signal related to a third angular position (θ3) of the third rotatable part (M3) relative to the third stationary part;
ix) determining, by the processing circuit, said third angle (θ3) based on said at least one third signal, and determining an absolute position of the third rotatable part (M3) based on the third angle (θ3) and on one or both of the first angle (θ1) and the second angle (θ2).

15. A torque sensor device for use in a torque sensor system according to any of the claims 1 to 12,
the torque sensor device comprising said first and said second stationary part;
and said processing circuit configured for performing at least the steps iv) to iv) of the method of claim 13 when used in combination with said first and second rotatable part;
and optionally wherein the said processing circuit is further configured for performing also the steps viii) and ix) of the method of claim 14 when used in a torque sensor system that furthermore comprises said third rotatable part.
